# EUROPÄISCHE PATENTSCHRIFT

(11) **EP 3 871 243 B1**
(45) Veröffentlichungstag und Bekanntmachung des Hinweises auf die Patenterteilung: **06.08.2025**
(21) Anmeldenummer: 19789961.0
(22) Anmeldetag: 17.10.2019
(51) Int. Cl.: H01H 3/50, H01H 15/10, B60N 2/02

(54) **SCHIEBESCHALTER FÜR EIN KRAFTFAHRZEUG**
SLIDING SWITCH FOR A MOTOR VEHICLE
COMMUTATEUR À COULISSE POUR UN VÉHICULE AUTOMOBILE

(30) Priorität: 25.10.2018 DE 102018126627
(43) Veröffentlichungstag der Anmeldung: 01.09.2021
(73) Patentinhaber: Valeo Schalter und Sensoren GmbH, 74321 Bietigheim-Bissingen (DE)
(72) Erfinder: WUNDERLICH, Frank, 96476 Bad Rodach (DE); HAEBLER, Peter, 96476 Bad Rodach (DE)
(74) Vertreter: Pothmann, Karsten
(86) Internationale Anmeldenummer: PCT/EP2019/078136
(87) Internationale Veröffentlichungsnummer: WO 2020/083729

(56) Entgegenhaltungen:
- EP-A1- 2 759 380
- WO-A1-2017/172630
- DE-A1- 102013 020 336

## Beschreibung

Die Erfindung betrifft einen Schiebeschalter für ein Kraftfahrzeug, mit einem Schieberelement und einem Grundkörper, durch welchen eine Führung gebildet ist. Entlang der Führung ist das Schieberelement aus einer Ausgangsposition in wenigstens eine Verschieberichtung verschiebbar. Der Schiebeschalter umfasst eine Haptikvorrichtung zum Ausgeben einer haptischen Rückmeldung an eine Bedienperson beim Verschieben des Schieberelements. Die Haptikvorrichtung weist wenigstens ein Druckstück auf, welches beim Verschieben des Schieberelements entlang einer Führungsbahn des Schiebeschalters geführt ist.

Die US 6 998 546 B1 beschreibt einen Schalter zum Verstellen eines elektromotorisch verstellbaren Fahrzeugsitzes. Durch Betätigen eines Steuerknopfs des Schalters kann ein Sitzinsasse ein Schaltmodul verschieben, welches zwischen zwei Führungsschienen des Schalters angeordnet ist. Das Schaltmodul weist eine senkrecht zu der Verschieberichtung verlaufende Durchgangsbohrung auf, in welcher zwei Druckstücke angeordnet sind. Die Druckstücke werden von einer Druckfeder in V-förmig ausgebildete Führungsbahnen gedrückt. In einer Neutralposition des Schaltmoduls befinden sich die Druckstücke im Bereich eines Scheitels der jeweiligen Führungsbahnen. Die EP 2 759 380 A1 offenbart einen Schiebeschalter nach dem Oberbegriff vom Anspruch 1.

Als nachteilig ist hierbei der Umstand anzusehen, dass konzeptbedingt die Druckstücke mit einem gewissen radialen Spiel in der Durchgangsbohrung angeordnet sind. Dies führt dazu, dass in der Neutralposition oder Ausgangsposition des Schaltmoduls das Schaltmodul ein Stück weit in die jeweiligen Verschieberichtungen bewegt werden kann. Ein solches "Wackeln" des Schaltmoduls in der Neutralposition ist nicht wünschenswert. Denn die Bedienperson kann ein derartiges Spiel in der Neutralposition als verwirrend oder störend beim Handhaben des Schalters empfinden.

Zudem führt das konzeptbedingte Spiel des Schaltmoduls in der Neutralposition zu einer unerwünschten Geräuschentwicklung beim Handhaben des Steuerknopfs. Des Weiteren bringt es erhöhte Kosten auch im Hinblick auf die Montage mit sich, wenn die Druckstücke als separate, in der Durchgangsbohrung anzuordnende Teile bereitgestellt werden.

Aufgabe der vorliegenden Erfindung ist es daher, einen Schiebeschalter der eingangs genannten Art zu schaffen, welcher besonders einfach aufgebaut und besonders funktionstauglich ist.

Diese Aufgabe wird durch einen Schiebeschalter mit den Merkmalen des Patentanspruchs 1 gelöst. Vorteilhafte Ausgestaltungen mit zweckmäßigen Weiterbildungen der Erfindung sind in den abhängigen Patentansprüchen angegeben.

Der erfindungsgemäße Schiebeschalter für ein Kraftfahrzeug umfasst ein Schieberelement und einen Grundkörper. Durch den Grundkörper ist eine Führung gebildet, entlang welcher das Schieberelement aus einer Ausgangsposition in wenigstens eine Verschieberichtung verschiebbar ist. Der Schiebeschalter umfasst eine Haptikvorrichtung zum Ausgeben einer haptischen Rückmeldung an eine Bedienperson beim Verschieben des Schieberelements. Die Haptikvorrichtung weist wenigstens ein Druckstück auf, welches beim Verschieben des Schieberelements entlang einer Führungsbahn des Schiebeschalters geführt ist. Das wenigstens eine Druckstück ist einstückig mit einem Arm ausgebildet, welcher an dem Schieberelement angeordnet ist. Das Druckstück ist also integraler Bestandteil des wenigstens einen Arms. Folglich braucht das wenigstens eine Druckstück nicht als separates Bauteil bereitgestellt zu werden. Damit entfällt auch ein bei einer separaten Ausbildung des Druckstücks vorhandenes Spiel zwischen dem Druckstück und einer Führung, in welcher das separat ausgebildete Druckstück verschiebbar ist, wenn das Druckstück gegen die Führungsbahn gedrückt wird.

Die einstückige Ausbildung des Druckstücks oder Führungsnocken mit dem Arm bringt es daher mit sich, dass auch das Schieberelement in der Ausgangsposition oder Nulllage beziehungsweise Neutralposition nicht relativ zu dem wenigstens einen Druckstück in die wenigstens eine Verschieberichtung verschiebbar ist. Folglich unterbleibt auch eine mit einer solchen Relativbewegbarkeit verbundene Geräuschentwicklung beim Betätigen des Schieberelements durch die Bedienperson.

Darüber hinaus ist die Funktionstauglichkeit des Schiebeschalters erhöht. Denn die Bedienperson wird nicht durch ein Spiel in der Ausgangsposition des Schieberelements gestört oder verwirrt. Dies ist insbesondere deswegen vorteilhaft, weil der Schiebeschalter für den Einsatz in einem Kraftfahrzeug vorgesehen ist, beispielsweise um eine Bewegung eines Kraftfahrzeugbauteils wie etwa eines Schiebdachs, eines Sitzes, einer Fensterscheibe oder dergleichen zu bewirken. Bei einer solchen Verwendung des Schiebeschalters in dem Kraftfahrzeug ist es von Vorteil, wenn die Bedienperson nicht durch das Bedienen des Schiebeschalters verwirrt ist. Denn dann ist auch nicht die Gefahr einer Ablenkung vom Verkehrsgeschehen gegeben.

Durch die integrale beziehungsweise einstückige Ausbildung des Druckstücks mit dem wenigstens einen Arm ist zudem ein besonders einfacher und kostengünstiger Aufbau des Schiebeschalters erreicht. Dies gilt insbesondere, weil das wenigstens eine Druckstück nicht als separates und somit erhöhte Kosten und einen erhöhten Montageaufwand mit sich bringendes Teil ausgebildet ist.

Vorzugsweise ist der Arm um eine Drehachse drehbar an dem Schieberelement gehalten. So kann besonders einfach sichergestellt werden, dass beim Verschieben des Schieberelements das Drückstück entlang der Führungsbahn beziehungsweise in der Führungsbahn geführt ist. Beispielsweise kann der Arm über ein Drehgelenk an dem Schieberelement angelenkt sein.

Vorzugsweise ist die Drehachse durch ein Filmscharnier bereitgestellt, über welches der Arm mit dem Schieberelement verbunden ist. Denn durch das Vorsehen des Filmscharniers, welches kein Lagerspiel aufweist, kann auf besonders einfache Art und Weise erreicht werden, dass in der Ausgangsposition des Schieberelements keine Relativbewegung zwischen dem Schieberelement und dem Druckstück möglich ist. Zudem lässt sich durch das Filmscharnier der Arm auf besonders einfache und kostengünstige Weise mit dem Schieberelement verbinden.

Der Arm kann als Federelement ausgebildet sein, welches das Druckstück mit einer das Druckstück gegen die Führungsbahn drückenden Kraft beaufschlagt. So ist ein besonders einfacher Aufbau des Schiebeschalters erreicht.

Erfindungsgemäß umfasst der Schiebeschalter wenigstens ein Federelement welches den Arm mit einer das Druckstück gegen die Führungsbahr drückenden Kraft beaufschlagt. Durch ein derartiges, separates Federelement kann insbesondere dafür gesorgt werden, dass über einen sehr großen Temperaturbereich hinweg das Druckstück mit einer im Wesentlichen gleich großen Kraft gegen die Führungsbahn gedrückt wird. Wenn demgegenüber lediglich eine Federkraft des Arms selbst dazu genutzt wird, das Druckstück in die Führungsbahn zu drücken, so ist eine Bewegbarkeit des Arms vergleichsweise stark abhängig von der Temperatur, welcher der Schiebeschalter und somit auch der Arm ausgesetzt ist. Dies gilt insbesondere, wenn der Arm aus einem Kunststoff gebildet ist.

Wird demgegenüber das wenigstens eine separate, insbesondere aus Metall gebildete, Federelement bereitgestellt, welches den Arm mit der das Druckstück gegen die Führungsbahn drückenden Kraft beaufschlagt, so kann über einen besonders großen Temperaturbereich hinweg eine im Wesentlichen gleich bleibende Kraftbeaufschlagung des wenigstens einen Arms mittels des separaten Federelements sichergestellt werden.

Es ist besonders einfach, funktionssicher und kostengünstig, dassdas wenigstens eine Federelement erfindungsgemäß als Schraubenfeder ausgebildet ist. Die Schraubenfeder kanr insbesondere aus Metall gebildet sein.

Als weiter vorteilhaft hat es sich gezeigt, dass der Arm einen mit dem Druckstück fluchtenden Vorsprung aufweist, welcher von einem Endbereich der Schraubenfeder umgriffen ist. Mit anderen Worten kann der Vorsprung in den Endbereich der Schraubenfeder eingeführt sein. Dadurch ist eine Einbaulage der Schraubenfeder besonders präzise vorgegeben. Dementsprechend ist eine sehr präzise Beaufschlagung des wenigstens einen Arms mit der das Druckstück in die Führungsbahn drückenden Kraft erreichbar.

In Richtung einer Längsachse des Schiebeschalters gesehen, welche mit der Verschieberichtung zusammenfällt, kann eine Basisplatte des Schieberelements ein erstes Ende und ein dem ersten Ende gegenüberliegendes zweites Ende aufweisen. Hierbei ist ein Endbereich des Arms an einem dieser Enden der Basisplatte angeordnet, und ein Abschnitt des Arms erstreckt sich von diesem Ende der Basisplatte hin zu dem Druckstück. Mit anderen Worten ist also das wenigstens eine Druckstück in Bezug auf eines der Enden der Basisplatte in Richtung der Längsachse zu der Basisplatte versetzt angeordnet.

Dies bringt es mit sich, dass der wenigstens eine Arm nicht seitlich neben der Basisplatte angeordnet zu werden braucht, sondern sich quasi in Verlängerung der Basisplatte in Richtung der Längsachse erstreckt. Auf diese Weise ist eine besonders schmale Bauweise des Schiebeschalters senkrecht zu der Längsachse erreichbar. Zudem stört so ein separates Federelement nicht, mittels welchem der Arm mit einer das Druckstück gegen die Führungsbahn drückenden Kraft beaufschlagt werden kann. Denn auch ein solches Federelement ist dann in Richtung der Längsachse versetzt zu der Basisplatte angeordnet.

Auf der Basisplatte des Schieberelements kann ein Betätigungselement angeordnet sein, welches zum Verschieben des Schieberelements zusammen mit der Basisplatte von der Bedienperson in die wenigstens eine Verschieberichtung bewegbar ist. Durch das Vorsehen eines solchen, insbesondere quaderförmigen, Betätigungselements lässt sich die Bedienbarkeit des Schiebeschalters durch die Bedienperson verbessern.

Vorzugsweise ist in das Betätigungselement wenigstens eine Lichtquelle integriert, mittels welcher wenigstens ein an dem Betätigungselement ausgebildetes Symbol beleuchtbar ist. Das wenigstens eine Symbol kann insbesondere die wenigstens eine Verschieberichtung und/oder eine Funktion des Schiebeschalters angeben. Durch das Beleuchten des wenigstens einen Symbols ist eine Bedienung des Schiebeschalters auch bei ungünstigen Lichtverhältnissen erleichtert. Die wenigstens eine Lichtquelle kann insbesondere als Leuchtdiode ausgebildet sein.

Insbesondere, wenn das Betätigungselement die wenigstens eine Lichtquelle aufweist, ist das Anordnen des separaten Federelements, welches den Arm mit der das Druckstück gegen die Führungsbahn drückenden Kraft beaufschlagt, in Richtung der Längsachse des Schiebeschalters versetzt zu dem Betätigungselement vorteilhaft. Denn dann braucht das separate Federelement nicht durch das Betätigungselement hindurchgeführt zu werden. Dadurch gestaltet sich das Integrieren der wenigstens einen Lichtquelle in das Betätigungselement besonders einfach.

Vorzugsweise sind das wenigstens eine Druckstück und der Arm aus einem Kunststoff gebildet, aus welchem auch eine Basisplatte des Schieberelements gebildet ist. Mit anderen Worten können also die Basisplatte des Schieberelements, der Arm und das Druckstück einstückig aus dem Kunststoff gebildet sein. Dies macht das Bereitstellen des wenigstens einen Druckstücks besonders aufwandsarm. Als der Kunststoff kann insbesondere Polyoxymethylen (POM) verwendet werden.

Vorzugsweise weist die Führungsbahn wenigstens eine Steigungsänderung oder eine Unstetigkeitsstelle auf, wobei aufgrund eines Erreichens der wenigstens einen Steigungsänderung oder der Unstetigkeitsstelle durch das wenigstens eine Druckstück das Ausgeben der haptischen Rückmeldung bewirkbar ist. Beispielsweise kann die Führungsbahn als die wenigstens eine Steigungsänderung oder Unstetigkeitsstelle eine Einbuchtung und/oder eine Stufe und/oder einen Vorsprung oder dergleichen aufweisen. Erreicht dann das Druckstück beim Verschieben des Schieberelements diese Steigungsänderung oder die Unstetigkeitsstelle, so ist ein entsprechender Ruck für die Bedienperson fühlbar, und folglich wird eine haptische Rückmeldung an die Bedienperson ausgegeben. Auf diese Weise kann der Bedienperson insbesondere kommuniziert werden, dass eine Endposition des Schieberelements erreicht ist oder in Kürze erreicht werden wird. Dies macht das Bedienen des Schiebeschalters besonders intuitiv. In die wenigstens eine Endposition kann das Schieberelement aus der Ausgangsposition verbracht werden, indem das Schieberelement aus der Ausgangsposition in die wenigstens eine Verschieberichtung verschoben wird.

Vorzugweise ist das Schieberelement aus der Ausgangsposition wahlweise in eine erste Verschieberichtung oder in eine der ersten Verschieberichtung entgegengesetzte zweite Verschieberichtung verschiebbar. So lassen sich mögliche Bewegungen eines durch das Betätigen des Schiebeschalters zu bewegenden Kraftfahrzeugbauteils besonders leicht nachvollziehen. Dies gilt insbesondere, wenn das Kraftfahrzeugbauteil durch das Verschieben in die erste Verschieberichtung in eine Offenstellung bewegbar ist und durch das Verschieben in die zweite Verschieberichtung in eine Geschlossenstellung.

Einem besonders kompakten und einfachen Aufbau des Schiebeschalters ist es zuträglich, wenn die Führungsbahn durch den Grundkörper des Schiebeschalters gebildet ist. Beispielsweise kann der Grundkörper wenigstens einen Schenkel aufweisen, in welchem die Führungsbahn ausgebildet ist.

Schließlich hat es sich als vorteilhaft gezeigt, dass die Haptikvorrichtung zwei Druckstücke aufweist, welche beim Verschieben des Schieberelements entlang jeweiliger Führungsbahnen geführt sind. Hierbei sind die Führungsbahnen symmetrisch zu einer Längsachse des Schiebeschalters ausgebildet, welche mit der wenigstens einen Verschieberichtung zusammenfällt. Die Druckstücke sind hierbei einstückig mit jeweiligen Armen ausgebildet, welche an dem Schieberelement angeordnet sind. Durch das Vorsehen von zwei Führungsbahnen und gegen die jeweiligen Führungsbahnen gedrückten Druckstücken lässt sich eine besonders deutlich wahrnehmbare haptische Rückmeldung erreichen.

Zudem kann durch das Vorsehen von zwei gegen die beiden Führungsbahnen gedrückten Druckstücken ein sehr funktionssicheres Führen des Schieberelements entlang der durch den Grundkörper gebildeten Führung besonders einfach realisiert werden. Insbesondere kann so vermieden werden, dass auf das Schieberelement aufgrund der das Druckstück gegen die Führungsbahn drückenden Kraft ein Drehmoment wirkt, welches dann ein Verkanten des Schieberelements in der durch den Grundkörper gebildeten Führung begünstigen könnte.

Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen verwendbar, ohne den Rahmen der Erfindung zu verlassen. Es sind somit auch Ausführungen von der Erfindung als umfasst und offenbart anzusehen, die in den Figuren nicht explizit gezeigt und erläutert sind, jedoch durch separierte Merkmalskombinationen aus den erläuterten Ausführungen hervorgehen und erzeugbar sind. Es sind auch Ausführungen und Merkmalskombinationen als offenbart anzusehen, die somit nicht alle Merkmale eines ursprünglich formulierten unabhängigen Anspruchs aufweisen. Es sind darüber hinaus Ausführungen und Merkmalskombinationen, insbesondere durch die oben dargelegten Ausführungen, als offenbart anzusehen, die über die in den Rückbezügen der Ansprüche dargelegten Merkmalskombinationen hinausgehen oder von diesen abweichen.

Weitere Merkmale der Erfindung ergeben sich aus den Ansprüchen, den Figuren und der Figurenbeschreibung. Dabei zeigen:
- Fig. 1: schematisch ein Kraftfahrzeug mit einem Dachmodul, an welchem ein Schiebeschalter angeordnet ist, wobei mittels des Schiebeschalters ein Öffnen und ein Schließen eines Schiebedachs des Kraftfahrzeugs bewirkbar ist;
- Fig. 2: den Schiebeschalter gemäß Fig. 1 in einer Perspektivansicht;
- Fig. 3: in einer vergrößerten Draufsicht den Schiebeschalter gemäß Fig. 2;
- Fig. 4: den Schiebeschalter gemäß Fig. 2, wobei sich ein Schieberelement des Schiebeschalters in einer Ausgangsposition oder Nulllage befindet;
- Fig. 5: den Schiebeschalter gemäß Fig. 2, wobei das Schieberelement maximal in eine erste Verschieberichtung verschoben ist; und
- Fig. 6: den Schiebeschalter gemäß Fig. 2, wobei das Schieberelement maximal in eine zweite Verschieberichtung verschoben ist.

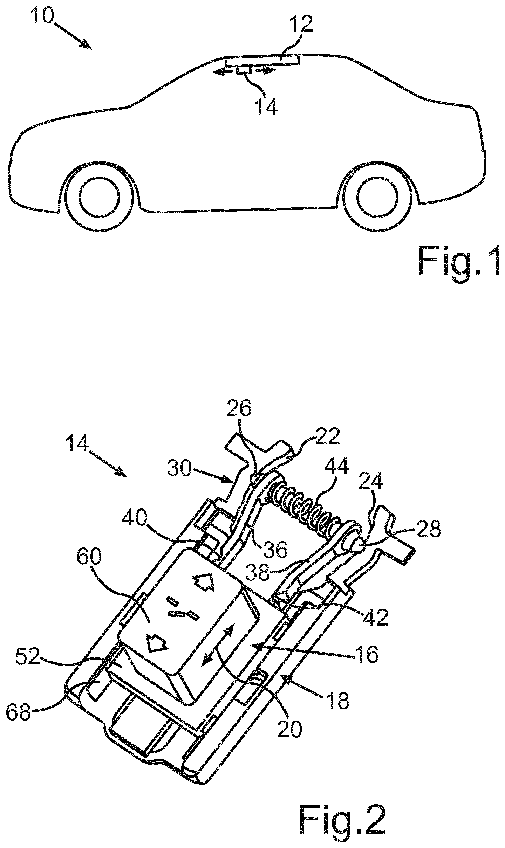

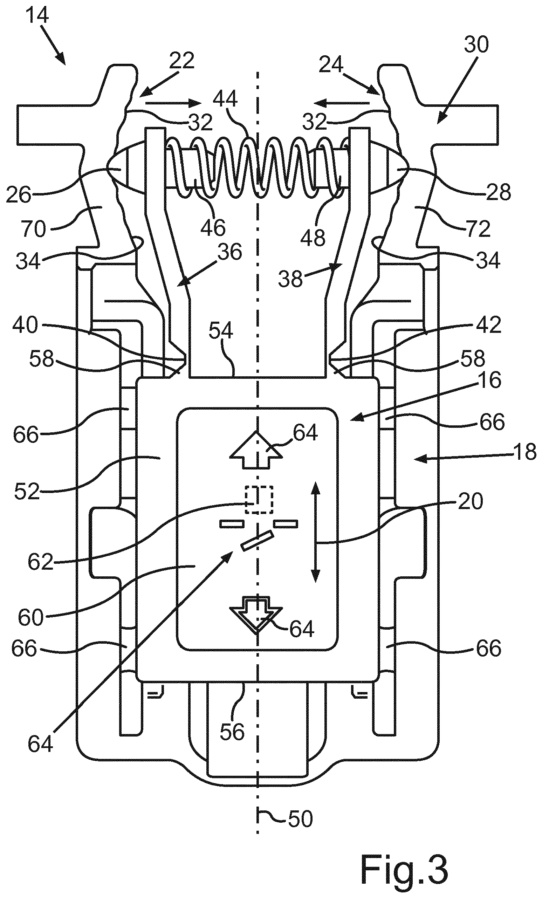

In Fig. 1 ist stark schematisiert ein Kraftfahrzeug 10 gezeigt, welches ein Dachmodul 12 aufweist. In dem Dachmodul 12 ist ein Schiebeschalter 14 angeordnet. Durch Betätigen des Schiebeschalters 14 lässt sich beispielsweise ein Öffnen und ein Schließen eines Schiebedachs des Kraftfahrzeugs 10 bewirken. In Fig. 2 sind Komponenten des Schiebeschalters 14 perspektivisch gezeigt. So umfasst der Schiebeschalter 14 ein Schieberelement 16 und einen Grundkörper 18. Durch den Grundkörper 18 ist eine Führung gebildet, entlang welcher das Schieberelement 16 aus einer in Fig. 2, Fig. 3 und Fig. 4 gezeigten Ausgangsposition in jeweilige Verschieberichtungen verschiebbar ist. Die Verschieberichtungen sind in Fig. 2 und in Fig. 3 durch einen Doppelpfeil 20 veranschaulicht.

Durch den Grundkörper 18 sind Führungsbahnen 22, 24 beziehungsweise Kulissenbahnen gebildet. Entlang dieser Führungsbahnen 22, 24 bewegen sich beim Verschieben des Schieberelements 16 zwei Druckstücke 26, 28 beziehungsweise Stößelkappen oder Führungsnocken. Das Bewegtwerden der Druckstücke 26, 28 entlang der Führungsbahnen 22, 24 sorgt für ein Ausgeben einer haptischen Rückmeldung an eine Bedienperson, welche das Schieberelement 16 in eine der durch den Doppelpfeil 20 angegebenen Verschieberichtungen verschiebt.

Durch das Zusammenwirken der Druckstücke 26, 28 mit den Führungsbahnen 22, 24, gegen welche die Druckstücke 26, 28 gedrückt werden, ist folglich eine passive Haptikvorrichtung 30 des Schiebeschalters 14 bereitgestellt. Insbesondere aus Fig. 3 ist diesbezüglich ersichtlich, dass die jeweiligen Führungsbahnen 22, 24 Steigungsänderungen etwa in Form von Einbuchtungen 32, 34 aufweisen können. Gelangen die Druckstücke 26, 28 aufgrund des Verschiebens des Schieberelements 16 in diese Einbuchtungen 32, 34, so ist dies von der Bedienperson haptisch wahrnehmbar.

Vorliegend ist das jeweilige Druckstück 26, 28 einstückig mit einem jeweiligen Arm 36, 38 ausgebildet. So ist das in Fig. 2 linke Druckstück 26 mit dem in Fig. 2 linken Arm 36 einstückig ausgebildet, und das in Fig. 2 rechte Druckstück 28 ist mit dem in Fig. 2 rechten Arm 38 einstückig ausgebildet. Die Arme 36, 38 sind über ein jeweiliges Filmscharnier 40, 42 mit dem Schieberelement 16 verbunden. Somit sind auch die Druckstücke 26, 28 integraler Bestandteil des Schieberelements 16.

Des Weiteren sind die Druckstücke 26, 28 flexibel gelagert. Denn im Bereich der Filmscharniere 40, 42 sind jeweilige Drehachsen bereitgestellt. Um diese Drehachsen ist der jeweilige Arm 36, 38 drehbar an dem Schieberelement 16 gehalten. Aufgrund der Anbindung der Druckstücke 26, 28 über die jeweiligen Arme 36, 38 an das Schieberelement 16 ist eine Bewegbarkeit des Schieberelements 16 relativ zu den Druckstücken 26, 28 nicht gegeben. Eine solche Relativbewegung läge hingegen vor, wenn die Druckstücke 26, 28 oder Stösselkappen als separate Bauteile ausgebildet wären, welche mit Spiel in jeweiligen Führungen gelagert sind. Die Relativbeweglichkeit führt dann auch dazu, dass in der in Fig. 2 gezeigten Ausgangsposition das Schieberelement 16 minimal in die jeweiligen Verschieberichtungen bewegt werden kann. Daraus resultiert eine unerwünschte Geräuschentwicklung. Dies ist vorliegend jedoch vermieden. Folglich rastet der Schiebeschalter 14 spielfrei und geräuscharm ein, und zwar sowohl beim Erreichen der jeweiligen Einbuchtungen 32, 34 als auch in der Ausgangsposition. Zudem entfällt vorliegend der Aufwand für das Bereitstellen von etwa als separate Metallkappen ausgebildeten Druckstücken oder Stößelkappen, weil die Druckstücke 26, 28 vorliegend einstückig mit dem jeweiligen Arm 36, 38 ausgebildet sind.

Eine Kraft, mit welcher das jeweilige Druckstück 26, 28 gegen die jeweilige Führungsbahn 22, 24 gedrückt wird, kann zumindest teilweise von den jeweiligen Armen 36, 38 selber aufgebracht werden, indem die Arme 36, 38 als Federarme beziehungsweise Federelemente ausgebildet werden. Vorliegend ist zum Bereitstellen der Kraft, welche die Druckstücke 26, 28 in der Richtung der Kulissenbahnen beziehungsweise Führungsbahnen 22, 24 drückt, jedoch zusätzlich ein weiteres, separates Federelement vorgesehen, welches beispielsweise als eine in Fig. 2 gezeigte Schraubenfeder 44 ausgebildet sein kann. Ist ein solches, separates Federelement vorgesehen, welches die Arme 36, 38 gegen die mit dem jeweiligen Druckstück 26, 28 korrespondierende Führungsbahn 22, 24 drückt, so ist eine entsprechende Federkraft des Federelements in besonders großem Maße unabhängig von den in der Umgebung des Schiebeschalters 14 vorliegenden Temperaturen.

Insbesondere aus Fig. 3 ist gut ersichtlich, dass der jeweilige Arm 36, 38 einen mit dem Druckstück 26, 28 des jeweiligen Arms 36, 38 fluchtenden Vorsprung 46, 48 aufweist. Dieser Vorsprung 46, 48 ist von einem jeweiligen Endbereich der Schraubenfeder 44 umgriffen. Mit anderen Worten ist der eine Vorsprung 46 in einen ersten Endbereich der Schraubenfeder 44 eingeführt, und der andere Vorsprung 48 ist in den gegenüberliegenden Endbereich der Schraubenfeder 44 eingeführt.

In Fig. 3 ist des Weiteren eine Längsachse 50 des Schiebeschalters 14 dargestellt, welche mit der durch den Doppelpfeil 20 angegebenen Verschieberichtung zusammenfällt. In Richtung dieser Längsachse 50 gesehen weist eine vorliegend rechteckig ausgebildete Basisplatte 52 des Schieberelements 16 ein erstes Ende 54 und ein dem ersten Ende 54 gegenüberliegendes zweites Ende 56 auf. Vorliegend sind jeweilige Endbereiche 58 der Arme 36, 38 an dem ersten Ende 54 der Basisplatte 52 angeordnet. Die Arme 36, 38 stehen also in Richtung der Längsachse 50 von dem ersten Ende 54 der Basisplatte 52 ab. Insbesondere sind die Arme 36, 38 einstückig mit der vorliegend aus einem Kunststoff gebildeten Basisplatte 52 ausgebildet.

Aufgrund des Abstehens der Arme 36, 38 in Richtung der Längsachse 50 von der Basisplatte 52 befinden sich die Schraubenfeder 44 und die Druckstücke 26, 28 nicht im Bereich eines vorliegend quaderförmigen Betätigungselements 60 oder Betätigungsteils des Schieberelements 16. An dem nach Art eines Blocks ausgebildeten Betätigungselements 60 kann die Bedienperson das Schieberelement 16 greifen, um zusammen mit dem Schieberelement 16 die Druckstücke 26, 28 in die jeweilige Verschieberichtung zu bewegen.

Das Anordnen der Arme 36, 38 an dem stirnseitigen ersten Ende 54 der Basisplatte 52 ist insbesondere dann vorteilhaft, wenn (wie vorliegend bevorzugt) in das Betätigungselement 60 wenigstens eine vorliegend lediglich schematisch angedeutete Lichtquelle 62 integriert ist. Im Betrieb der Lichtquelle 62 werden an dem Betätigungselement 60 ausgebildete Symbole 64 beleuchtet, welche beispielsweise das Schiebedach des Kraftfahrzeugs 10 und/oder die unterschiedlichen Verschieberichtungen veranschaulichen können. Vorliegend sind die Verschieberichtungen durch als Pfeile ausgebildete Symbole 64 veranschaulicht.

Bei dem gezeigten Ausführungsbeispiel des Schiebeschalters 14 sind insbesondere von der Basisplatte 52 nach außen, also senkrecht zu der Längsachse 50, vorstehende Laschen 66 (vergleiche Fig. 3) in Führungsschlitzen 68 geführt, welche in dem Grundkörper 18 ausgebildet sind (vergleiche Fig. 2). Vorliegend ist also durch diese Führungsschlitze 68 die Führung des Grundkörpers 18 für das Schieberelement 16 gebildet oder bereitgestellt.

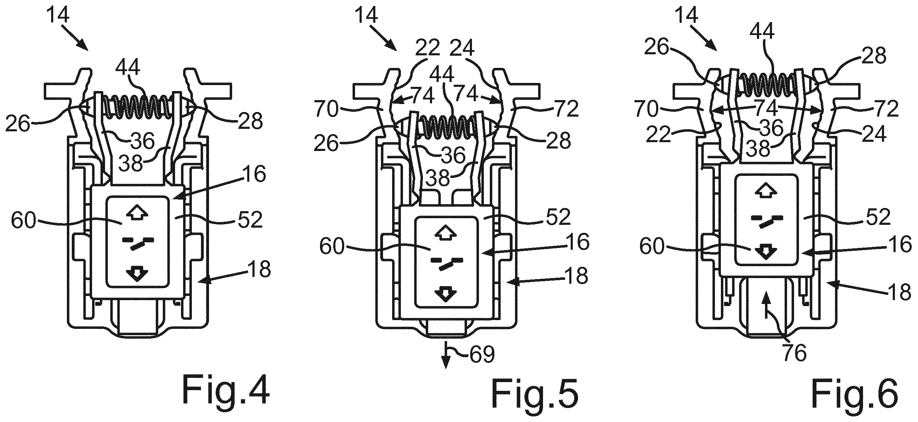

Ausgehend von der in Fig. 3 und Fig. 4 gezeigten Ausgangslage beziehungsweise Nulllage des Schieberelements 16 können das Schieberelement 16 und folglich zusammen mit diesem die Druckstücke 26, 28 in eine erste Endposition verschoben werden, welche in Fig. 5 dargestellt ist. Hierbei bewegen sich die Druckstücke 26, 28 entlang der Führungsbahnen 22, 24 in eine erste Verschieberichtung 69, welche in Fig. 5 durch einen Pfeil veranschaulicht ist. Wird das Schieberelement 16 in die erste Verschieberichtung 69 verschoben, so bewirkt dies vorliegend ein Öffnen des Schiebedachs.

Schenkel 70, 72 des Grundkörpers 18, in welchen die jeweiligen Führungsbahnen 22, 24 ausgebildet sind, weisen vorliegend eine sehr weit geöffnete V-Form auf. Die Druckstücke 26, 28 befinden sich im Bereich eines jeweiligen Scheitels 74 dieser flachen V-Form, wenn das Schieberelement 16 in seine Ausgangsposition (vergleiche Fig. 4) verbracht ist.

Folglich sind in der in Fig. 5 gezeigten ersten Endposition des Schieberelements 16 die in den Führungsbahnen 22, 24 geführten Druckstücke 26, 28 weiter aufeinander zu bewegt als bei in die Ausgangsposition verbrachtem Schieberelement 16 (vergleiche Fig. 4). Dementsprechend ist auch die Schraubenfeder 44 stärker komprimiert als dann, wenn sich das Schieberelement 16 in der in Fig. 4 gezeigten Ausgangsposition befindet. Der Kraft-Weg-Verlauf wird also durch die Form der Kulissenbahnen beziehungsweise Führungsbahnen 22, 24 und die Federkraft der Schraubenfeder 44 bestimmt.

In Fig. 6 ist das Schieberelement 16 des Schiebeschalters 14 in eine zweite Endposition verschoben gezeigt. Eine entsprechende zweite Verschieberichtung 76, welche der ersten Verschieberichtung 69 entgegengesetzt ist, ist in Fig. 6 durch einen weiteren Pfeil veranschaulicht. Aufgrund der V-Form der Schenkel 70, 72 ist auch in dieser Endposition des Schieberelements 16 ein Abstand zwischen den Druckstücken 26, 28 geringer als bei in die Ausgangsposition verbrachtem Schieberelement 16. Folglich ist auch hier die Schraubenfeder 44 stärker komprimiert als in der in Fig. 4 gezeigten Ausgangsposition des Schieberelements 16.

Die V-Form der Führungsbahnen 22, 24 bewirkt zusammen mit der Kraft der Schraubenfeder 44 auch ein Zurückbewegen beziehungsweise Rückstellen des Schieberelements 16 aus den jeweiligen Endpositionen in die Ausgangsposition. Folglich ist auch eine in die jeweiligen Verschieberichtungen 69, 76 zunehmende Rückstellkraft von der Bedienperson als haptische Rückmeldung der vorliegend passiven Haptikvorrichtung 30 wahrnehmbar.

## Patentansprüche

1. Schiebeschalter (14) für ein Kraftfahrzeug (10), mit einem Schieberelement (16) und einem Grundkörper (18), durch welchen eine Führung gebildet ist, entlang welcher das Schieberelement (16) aus einer Ausgangsposition in wenigstens eine Verschieberichtung (20) verschiebbar ist, und mit einer Haptikvorrichtung (30) zum Ausgeben einer haptischen Rückmeldung an eine Bedienperson beim Verschieben des Schieberelements (16), wobei die Haptikvorrichtung (30) wenigstens ein Druckstück (26, 28) aufweist, welches beim Verschieben des Schieberelements (16) entlang einer Führungsbahn (22, 24) des Schiebeschalters (14) geführt ist,
wobei das wenigstens eine Druckstück (26, 28) einstückig mit einem Arm (36, 38) ausgebildet ist, welcher an dem Schieberelement (16) angeordnet ist,
wobei die Haptikvorrichtung (30) zwei Druckstücke (26, 28) aufweist, welche beim Verschieben des Schieberelements (16) entlang jeweiliger Führungsbahnen (22, 24) geführt sind, wobei die Führungsbahnen (22, 24) symmetrisch zu einer Längsachse (50) des Schiebeschalters (14) ausgebildet sind, welche mit der wenigstens einen Verschieberichtung (20) zusammenfällt, und wobei die Druckstücke (26, 28) einstückig mit jeweiligen Armen (36, 38) ausgebildet sind, welche an dem Schieberelement (16) angeordnet sind,
wobei der Schiebeschalter (14) ein Federelement (44) umfasst, welches die Arme (36, 38) mit einer das Druckstück (26, 28) gegen die Führungsbahn (22, 24) drückenden Kraft beaufschlagt,
**dadurch gekennzeichnet, dass**
das wenigstens eine Federelement als Schraubenfeder (44) ausgebildet ist und der Arm (36, 38) einen mit dem Druckstück (26, 28) fluchtenden Vorsprung (46, 48) aufweist, welcher von einem Endbereich der Schraubenfeder (44) umgriffen ist.

2. Schiebeschalter (14) nach Anspruch 1,
**dadurch gekennzeichnet, dass**
der Arm (36, 38) um eine Drehachse drehbar an dem Schieberelement (16) gehalten ist.

3. Schiebeschalter (14) nach Anspruch 2,
**dadurch gekennzeichnet, dass**
die Drehachse durch ein Filmscharnier (40, 42) bereitgestellt ist, über welches der Arm (36, 38) mit dem Schieberelement (16) verbunden ist.

4. Schiebeschalter (14) nach einem der Ansprüche 1 bis 3,
**dadurch gekennzeichnet, dass**
der Arm (36, 38) als Federelement ausgebildet ist, welches das Druckstück (26, 28) mit einer das Druckstück (26, 28) gegen die Führungsbahn (22, 24) drückenden Kraft beaufschlagt.

5. Schiebeschalter (14) nach einem der Ansprüche 1 bis 4,
**dadurch gekennzeichnet, dass**
in Richtung einer Längsachse (50) des Schiebeschalters (14) gesehen, welche mit der Verschieberichtung (20) zusammenfällt, eine Basisplatte (52) des Schieberelements (16) ein erstes Ende (54) und ein dem ersten Ende (54) gegenüberliegendes zweites Ende (56) aufweist, wobei ein Endbereich (58) des Arms (36, 38) an einem dieser Enden (54, 56) der Basisplatte (52) angeordnet ist, und wobei sich ein Abschnitt des Arms (36, 38) von diesem Ende (54) der Basisplatte (52) hin zu dem Druckstück (26, 28) erstreckt.

6. Schiebeschalter (14) nach Anspruch 5,
**dadurch gekennzeichnet, dass**
auf der Basisplatte (52) des Schieberelements (16) ein Betätigungselement (60) angeordnet ist, welches zum Verschieben des Schieberelements (16) zusammen mit der Basisplatte (52) von der Bedienperson in die wenigstens eine Verschieberichtung (20) bewegbar ist.

7. Schiebeschalter (14) nach Anspruch 6,
**dadurch gekennzeichnet, dass**
in das Betätigungselement (60) wenigstens eine Lichtquelle (62) integriert ist, mittels welcher wenigstens ein an dem Betätigungselement (60) ausgebildetes Symbol (64) beleuchtbar ist.

8. Schiebeschalter (14) nach einem der Ansprüche 1 bis 7,
**dadurch gekennzeichnet, dass**
das wenigstens eine Druckstück (26, 28) und der Arm (36, 38) aus einem Kunststoff gebildet sind, aus welchem auch eine Basisplatte (52) des Schieberelements (16) gebildet ist.

9. Schiebeschalter (14) nach einem der Ansprüche 1 bis 8,
**dadurch gekennzeichnet, dass**
die Führungsbahn (22, 24) wenigstens eine Steigungsänderung (32, 34) oder eine Unstetigkeitsstelle aufweist, wobei aufgrund eines Erreichens der wenigstens einen Steigungsänderung (32, 34) oder der Unstetigkeitsstelle durch das wenigstens eine Druckstück (26, 28) das Ausgeben der haptischen Rückmeldung bewirkbar ist.

10. Schiebeschalter (14) nach einem der Ansprüche 1 bis 9,
**dadurch gekennzeichnet, dass**
das Schieberelement (16) aus der Ausgangsposition wahlweise in eine erste Verschieberichtung (69) oder in eine der ersten Verschieberichtung (69) entgegengesetzte zweite Verschieberichtung (76) verschiebbar ist.

11. Schiebeschalter (14) nach einem der Ansprüche 1 bis 10,
**dadurch gekennzeichnet, dass**
die Führungsbahn (22, 24) durch den Grundkörper (18) des Schiebeschalters (14) gebildet ist.

## Claims

1. Sliding switch (14) for a motor vehicle (10), having a slider element (16) and a main body (18), by which a guide is formed, along which the slider element (16) can be moved from a starting position in at least one direction of movement (20), and with a haptic device (30) for outputting haptic feedback to an operator when the slider element (16) is moved, wherein the haptic device (30) has at least one pressure piece (26, 28) which is guided along a guide track (22, 24) of the sliding switch (14) when the slider element (16) is moved,
wherein the at least one pressure piece (26, 28) is formed in one piece with an arm (36, 38) which is arranged on the slider element (16),
wherein the haptic device (30) has two pressure pieces (26, 28) which are guided along respective guide tracks (22, 24) during the movement of the slider element (16), wherein the guide tracks (22, 24) are symmetrically formed with respect to a longitudinal axis (50) of the sliding switch (14), which coincides with the at least one movement direction (20), and wherein the pressure pieces (26, 28) are formed in one piece with respective arms (36, 38) which are arranged on the slider element (16),
wherein the sliding switch (14) comprises a spring element (44) which loads the arms (36, 38) with a force which presses the pressure piece (26, 28) against the guide track (22, 24),
**characterized in that**
the at least one spring element is formed as a coil spring (44) and the arm (36, 38) has a projection (46, 48) which is aligned with the pressure piece (26, 28) and is surrounded by an end portion of the coil spring (44).

2. Sliding switch (14) according to Claim 1,
**characterized in that**
the arm (36, 38) is held on the slider element (16) rotatably about a rotational axis.

3. Sliding switch (14) according to Claim 2,
**characterized in that**
the rotational axis is provided by an integral hinge (40, 42), via which the arm (36, 38) is connected to the slider element (16).

4. Sliding switch (14) according to one of Claims 1 to 3,
**characterized in that**
the arm (36, 38) is formed as a spring element which loads the pressure piece (26, 28) with a force which presses the pressure piece (26, 28) against the guide track (22, 24).

5. Sliding switch (14) according to one of Claims 1 to 4,
**characterized in that**,
as viewed in the direction of a longitudinal axis (50) of the sliding switch (14), which coincides with the movement direction (20), a base plate (52) of the slider element (16) has a first end (54) and a second end (56) lying opposite the first end (54), wherein an end region (58) of the arm (36, 38) is arranged at one of these ends (54, 56) of the base plate (52), and wherein a portion of the arm (36, 38) extends from this end (54) of the base plate (52) to the pressure piece (26, 28).

6. Sliding switch (14) according to Claim 5,
**characterized in that**
an actuating element (60) is arranged on the base plate (52) of the slider element (16), which actuating element is movable for the movement of the slider element (16) together with the base plate (52) by the operator in the at least one movement direction (20).

7. Sliding switch (14) according to Claim 6,
**characterized in that**
at least one light source (62) is integrated into the actuating element (60), by means of which light source at least one symbol (64) formed on the actuating element (60) can be illuminated.

8. Sliding switch (14) according to one of Claims 1 to 7,
**characterized in that**
the at least one pressure piece (26, 28) and the arm (36, 38) are formed from a plastic, from which a base plate (52) of the slider element (16) is also formed.

9. Sliding switch (14) according to one of Claims 1 to 8,
**characterized in that**
the guide track (22, 24) has at least one gradient change (32, 34) or a point of discontinuity, wherein the outputting of the haptic feedback can be effected due to the at least one gradient change (32, 34) or the point of discontinuity being reached by the at least one pressure piece (26, 28).

10. Sliding switch (14) according to one of Claims 1 to 9,
**characterized in that**
the slider element (16) can be moved from the starting position either in a first movement direction (69) or in a second movement direction (76) opposite to the first movement direction (69).

11. Sliding switch (14) according to one of Claims 1 to 10,
**characterized in that**
the guide track (22, 24) is formed by the main body (18) of the sliding switch (14).

## Revendications

1. Commutateur à coulisse (14) pour un véhicule automobile (10), avec un élément coulissant (16) et un corps de base (18), par lequel est formé un guidage le long duquel l'élément coulissant (16) peut être coulissé d'une position initiale dans au moins une direction de coulissement (20), et avec un dispositif haptique (30) pour émettre un retour haptique à un opérateur lors du coulissement de l'élément coulissant (16), le dispositif haptique (30) présentant au moins une pièce de pression (26, 28) qui, lors du coulissement de l'élément coulissant (16), est guidée le long d'une voie de guidage (22, 24) du commutateur à coulisse (14),
où l'au moins une pièce de pression (26, 28) est réalisée d'un seul tenant avec un bras (36, 38) qui est agencé sur l'élément coulissant (16),
où le dispositif haptique (30) présente deux pièces de pression (26, 28) qui, lors du coulissement de l'élément coulissant (16), sont guidées le long de voies de guidage respectives (22, 24), où les voies de guidage (22, 24) sont réalisées symétriquement par rapport à un axe longitudinal (50) du commutateur à coulisse (14) qui coïncide avec l'au moins une direction de coulissement (20), et où les pièces de pression (26, 28) sont réalisées d'un seul tenant avec des bras respectifs (36, 38) qui sont agencés sur l'élément coulissant (16),
où le commutateur à coulisse (14) comprend un élément à ressort (44) qui sollicite les bras (36, 38) avec une force pressant la pièce de pression (26, 28) contre la voie de guidage (22, 24),
**caractérisé en ce que**
l'au moins un élément à ressort est réalisé sous forme de ressort hélicoïdal (44) et le bras (36, 38) présente une saillie (46, 48) alignée avec la pièce de pression (26, 28), qui est entourée par une zone d'extrémité du ressort hélicoïdal (44).

2. Commutateur à coulisse (14) selon la revendication 1,
**caractérisé en ce que**
le bras (36, 38) est maintenu sur l'élément coulissant (16) de manière à pouvoir tourner autour d'un axe de rotation.

3. Commutateur à coulisse (14) selon la revendication 2,
**caractérisé en ce que**
l'axe de rotation est fourni par une charnière en film (40, 42) par l'intermédiaire de laquelle le bras (36, 38) est relié à l'élément coulissant (16).

4. Commutateur à coulisse (14) selon l'une quelconque des revendications 1 à 3,
**caractérisé en ce que**
le bras (36, 38) est réalisé sous forme d'élément à ressort qui sollicite la pièce de pression (26, 28) avec une force pressant la pièce de pression (26, 28) contre la voie de guidage (22, 24).

5. Commutateur à coulisse (14) selon l'une quelconque des revendications 1 à 4,
**caractérisé en ce que**
vu dans la direction d'un axe longitudinal (50) du commutateur à coulisse (14) qui coïncide avec la direction de coulissement (20), une plaque de base (52) de l'élément coulissant (16) présente une première extrémité (54) et une deuxième extrémité (56) opposée à la première extrémité (54), où une zone d'extrémité (58) du bras (36, 38) est agencée à l'une de ces extrémités (54, 56) de la plaque de base (52), et où une section du bras (36, 38) s'étend depuis cette extrémité (54) de la plaque de base (52) vers la pièce de pression (26, 28).

6. Commutateur à coulisse (14) selon la revendication 5,
**caractérisé en ce que**
sur la plaque de base (52) de l'élément coulissant (16) est agencé un élément d'actionnement (60) qui, pour le coulissement de l'élément coulissant (16), peut être déplacé conjointement avec la plaque de base (52) par l'opérateur dans l'au moins une direction de coulissement (20).

7. Commutateur à coulisse (14) selon la revendication 6,
**caractérisé en ce que**
au moins une source de lumière (62) est intégrée dans l'élément d'actionnement (60), au moyen de laquelle au moins un symbole (64) réalisé sur l'élément d'actionnement (60) peut être éclairé.

8. Commutateur à coulisse (14) selon l'une quelconque des revendications 1 à 7,
**caractérisé en ce que**
l'au moins une pièce de pression (26, 28) et le bras (36, 38) sont formés d'une matière plastique dans laquelle est également formée une plaque de base (52) de l'élément coulissant (16).

9. Commutateur à coulisse (14) selon l'une quelconque des revendications 1 à 8,
**caractérisé en ce que**
la voie de guidage (22, 24) présente au moins une variation de pente (32, 34) ou un point de discontinuité, l'émission du retour haptique pouvant être provoquée en raison de l'atteinte de l'au moins une variation de pente (32, 34) ou du point de discontinuité par l'au moins une pièce de pression (26, 28).

10. Commutateur à coulisse (14) selon l'une quelconque des revendications 1 à 9,
**caractérisé en ce que**
l'élément coulissant (16) peut être coulissé de la position initiale, au choix, dans une première direction de coulissement (69) ou dans une deuxième direction de coulissement (76) opposée à la première direction de coulissement (69).

11. Commutateur à coulisse (14) selon l'une quelconque des revendications 1 à 10,
**caractérisé en ce que**
la voie de guidage (22, 24) est formée par le corps de base (18) du commutateur à coulisse (14).
